# EUROPÄISCHE PATENTSCHRIFT

(11) **EP 2 435 683 B1**
(45) Veröffentlichungstag und Bekanntmachung des Hinweises auf die Patenterteilung: **16.07.2014**
(21) Anmeldenummer: 10721799.4
(22) Anmeldetag: 26.05.2010
(51) Int. Cl.: F02D 41/38, F02D 19/06

(54) **VORRICHTUNG ZUM BETREIBEN EINER BRENNKRAFTMASCHINE**
APPARATUS FOR CONTROLLING AN INTERNAL COMBUSTION ENGINE
APPAREIL POUR COMMANDE D'UN MOTOR À COMBUSTION INTERNE

(30) Priorität: 28.05.2009 DE 102009023047
(43) Veröffentlichungstag der Anmeldung: 04.04.2012
(73) Patentinhaber: Dotzer, Alois, 90584 Allersberg (DE); Gruber, Georg, 91161 Hilpoltstein (DE); Kaiser, Thomas, 80798 München (DE)
(72) Erfinder: Dotzer, Alois, 90584 Allersberg (DE); Gruber, Georg, 91161 Hilpoltstein (DE); Kaiser, Thomas, 80798 München (DE)
(74) Vertreter: Oberhardt, Knut
(86) Internationale Anmeldenummer: PCT/EP2010/057223
(87) Internationale Veröffentlichungsnummer: WO 2010/136477

(56) Entgegenhaltungen:
- WO-A1-2008/000462
- WO-A2-2006/005930
- DE-A1-102007 051 631

## Beschreibung

Die Erfindung betrifft eine dieselmotorisch betriebene Brennkraftmaschine nach dem Oberbegriff von Anspruch 1.

Aufgrund der Verknappung von Erdöl und aus Gründen des Umweltschutzes sind Motoren bekannt geworden, die mit Pflanzenöl oder anderen aus Pflanzenöl gewonnenen Kraftstoffen wie beispielsweise Biodiesel betrieben werden können. Bisher wurden insbesondere Vor- und Wirbelkammermotoren so abgeändert, dass sie im so genannten Ein-Tank-System für den Betrieb mit solchen Kraftstoffen geeignet waren. Diese Motoren konnten nach der Anpassung auf den Pflanzenölbetrieb jedoch weiterhin auch mit Dieselkraftstoff betrieben werden.

Mit zwei Kraftstoffen betreibbare Motoren sind bereits in der WO 2008/000462 A1, der DE 10 207 051361 A1 und der WO 2006/005930 A2 beschrieben.

Bei den neuen direkteinspritzenden Dieselmotoren, die z. B. mit der Pumpe-Düse- oder Common-Rail-Technik arbeiten, sind die Parameter für die Motorsteuerung so auf einen einzigen Kraftstoff optimiert, dass ein Betrieb mit einem alternativen Kraftstoff praktisch nicht mehr möglich ist. Dies ist zurückzuführen auf die doch sehr unterschiedlichen Eigenschaften von Pflanzenöl und Dieselkraftstoff. Während Dieselkraftstoff beispielsweise über einen beachtlichen Temperaturbereich keine Viskositätsänderung zeigt, ist Pflanzenöl bei tieferen Temperaturen doch sehr zähflüssig. Weiterhin handelt es sich bei Pflanzenöl aber auch bei Biodiesel um einen Kraftstoff, dessen Zündpunkt erheblich höher liegt als der Zündpunkt von Dieselkraftstoff. Das bedeutet, dass bei Pflanzenöl diejenige Temperatur, auf die man das Pflanzenöl erhitzen muss, damit es sich in Gegenwart von Luftsauerstoff ohne Zündquelle, ausschließlich aufgrund seiner Erhitzung, selbst entzündet, wesentlich höher liegt als bei Dieselkraftstoff. Der Zündpunkt von Dieselkraftstoff liegt bei ca. 220°C, während der Zündpunkt von Pflanzenöl - abhängig von der Sorte - bei etwa 300°C liegt.

Diese Unterschiede führen dazu, dass bei modernen Motoren, die auf Leistung und Abgas optimiert sind, bei Verwendung dieser unterschiedlichen Treibstoffe auch mit unterschiedlichen Motorsteuerungsparametem operiert werden muss. Dies würde bedeuten, dass ein Motor, der einmal an den Betrieb mit Pflanzenöl angepasst ist, nicht mehr mit Dieselkraftstoff zu betreiben ist. Da europaweit jedoch keine flächendeckende Versorgung mit Pflanzenöl gewährleistet ist, würde dies einen enormen Komfortverlust bedeuten. Die weitere Marktdurchsetzung mit Pflanzenölmotoren wäre daher stark in Frage gestellt.

Ähnliche Probleme ergeben sich bei den so genannten Zwei-Tank-Systemen. Diese Motoren werden beim Start und im unteren Leistungsbereich mit Dieselkraftstoff betrieben. Im höheren Leistungsbereich wird auf Pflanzenöl umgeschaltet. Auch in diesem Fall müsste der Motor beim Dieselbetrieb mit anderen Steuerungsparametern als im Pflanzenölbetrieb gesteuert werden. Dies gilt insbesondere dann, wenn beim Betrieb mit beiden Kraftstoffen die neuen anspruchsvollen Abgasnormen erreicht werden sollen.

In der DE 10 2008 013 163 A1 wurde bereits erkannt, dass der Einspritzbeginn einen erheblichen Einfluss auf das Verhalten einer Brennkraftmaschine beim Betrieb mit unterschiedlichen Kraftstoffen hat. Überraschenderweise hatte sich herausgestellt, dass der Einspritzbeginn für Pflanzenöl mit seinem hohen Zündpunkt im höheren Lastbereich gegenüber Dieselkraftstoff mit einem wesentlich niedrigeren Zündpunkt nicht vorverlegt, sondern nach hinten verschoben wird. Diese Erkenntnis widersetzte sich allen bisherigen Überlegungen zu den Unterschieden zwischen Dieselkraftstoff und Pflanzenöl. Durch die Verschiebung des Einspritzbeginns bei Pflanzenölbetrieb wurde trotz des höheren Zündpunkts von Pflanzenöl gegenüber Dieselkraftstoff eine hervorragende Verbrennung mit hohem Wirkungsgrad erreicht.

Es wurde auch bereits in dieser Voranmeldung erkannt, dass im Niedriglastbereich das genaue Gegenteil wie im Hochlastbereich stattfinden muss. Hier wird der Einspritzbeginn bei Pflanzenöl gegenüber Dieselkraftstoff nach vorne verlegt. Auch durch diese Maßnahme wird eine saubere Verbrennung von Pflanzenöl mit hohem Wirkungsgrad gewährleistet.

Der Erfindung liegt die Aufgabe zugrunde, eine dieselmotorisch betriebene Brennkraftmaschine so anzupassen, dass sie sowohl mit einem Kraftstoff mit höherem Zündpunkt - insbesondere Pflanzenöl oder einem aus Pflanzenöl gewonnenen Kraftstoff - als auch mit Dieselkraftstoff betrieben werden kann, mit beiden Kraftstoffen einen ähnlichen Wirkungsgrad erbringt und trotzdem die NOₓ-Werte im Abgas gering gehalten werden.

Gelöst wird die Aufgabe mit einer dieselmotorisch betriebenen Brennkraftmaschine mit den Merkmalen von Anspruch 1. Es hat sich herausgestellt, dass für das Abgasverhalten der Brennkraftmaschine bei Einsatz unterschiedlicher Kraftstoffe insbesondere der Einspritzdruck maßgeblich ist. Überraschenderweise muss der Einspritzdruck für Pflanzenöl mit seinem hohen Zündpunkt im höheren Lastbereich (im Mittellast- und Hochlastbereich, oder wenigstens im Hochlastbereich) gegenüber Dieselkraftstoff mit seinem wesentlich niedrigeren Zündpunkt nicht etwa angehoben, sondern sogar abgesenkt werden. Diese Erkenntnis widersetzt sich allen bisherigen Überlegungen zu den Unterschieden zwischen Dieselkraftstoff und Pflanzenöl. Durch die erfindungsgemäße Absenkung des Einspritzdrucks im höheren Leistungsbereich bei Pflanzenölbetrieb wird trotz des höheren Zündpunkts von Pflanzenöl gegenüber Dieselkraftstoff eine hervorragende Verbrennung und ein ausgezeichnetes Abgasverhalten, insbesondere bei den NOₓ-Werten, erreicht. Im Mittel- und Niederlastbereich, oder wenigstens im Niederlastbereich wird der Einspritzdruck dagegen nicht abgesenkt, sondern gleich gehalten oder erhöht.

Vorteilhaft wird auch die Einspritzdauer im Hoch- und/oder Mittellastbereich gleichzeitig mit der Absenkung des Einspritzdrucks verlängert. Es ergibt sich auf diese Weise für Pflanzenöl und Dieselkraftstoff in etwa die gleiche Einspritzmenge, da mit niedrigerem Druck aber während einer verlängerten Zeitdauer eingespritzt wird. Die Leistung bleibt auf diese Weise bei dem Betrieb mit Dieselkraftstoff und dem Betrieb mit Pflanzenöl ungefähr gleich.

In vorteilhafter Weise findet im Niedriglastbereich genau das Gegenteil wie im Hochlastbereich statt. Hier wird der Einspritzdruck bei Pflanzenöl gegenüber Dieselkraftstoff angehoben. Auch durch diese Maßnahme wird eine saubere Verbrennung von Pflanzenöl mit geringer NOₓ-Belastung der Abgase gewährleistet.

In einem bevorzugten Ausführungsbeispiel wird der im Moment verwendete Kraftstoff mit Hilfe eines Sensors detektiert und die Steuerungsparameter werden in Abhängigkeit von dem erkannten Kraftstoff automatisch angepasst. Hierdurch ist ein zusätzlicher Komfortgewinn erzielbar, da eine manuelle Umschaltung nicht notwendig ist. Ebenso wird verhindert, dass eine Umschaltung der Steuerungsparameter vergessen werden kann und der Motor mit den nicht für diese Kraftstoffsorte optimierten Steuerungsparametern betrieben wird.

Bevorzugt wird als Sensor ein Wärmeleitsensor verwendet, der seinen elektrischen Widerstand bei Temperaturänderungen entsprechend verändert. Die Temperaturänderung des Sensors ergibt sich aufgrund der unterschiedlichen Wärmeleitfähigkeit der verschiedenen Kraftstoffsorten. Die Änderung des Widerstands wird von dem Mikroprozessor abgegriffen und der entsprechenden Kraftstoffsorte zugeordnet.

In einem weiteren Ausführungsbeispiel wird die verwendete Kraftstoffsorte über die unterschiedliche Viskosität in Abhängigkeit von der Temperatur festgestellt. Da bei Pflanzenöl die Viskosität temperaturabhängig ist, ist es sinnvoll, nicht nur die Viskosität selbst, sondern auch die Temperatur des Kraftstoffes festzustellen. Nur bei hohen Temperaturen ist die Viskosität von Pflanzenöl der Viskosität von Dieselkraftstoff vergleichbar, bei geringeren Temperaturen ist Pflanzenöl dagegen wesentlich zähflüssiger als Dieselkraftstoff.

Die Viskosität lässt sich am besten über Druckverhältnisse feststellen. So kann beispielsweise eine Drossel verwendet werden, wobei vor und nach der Drossel je ein Drucksensor vorgesehen ist. Über die Differenz der gemessenen Drücke kann die Viskosität des Kraftstoffes ermittelt werden. Ebenso ist eine Viskositätsmessung aber auch über einen piezo-elektrischen Torsionsschwinger-Kristall möglich. Solche Sensoren sind mit bereits integrierter Temperaturmessung erhältlich.

Bei der alternierenden Verwendung unterschiedlicher Kraftstoffe ist bei einem Ein-Tank-System meist davon auszugehen, dass sich in dem Kraftstofftank eine Mischung der beiden Kraftstoffsorten befindet. Die Eigenschaften dieser Kraftstoffmischung sind nun von dem Mischungsverhältnis der beiden Kraftstoffsorten abhängig. In vorteilhafter Weise wird daher ein Schwellwert für die abgegriffenen Eigenschaften festgelegt, bei dem jeweils auf die anderen Steuerungsparameter umgeschaltet wird. Bei einer Viskositätsmessung muss hier wiederum berücksichtigt werden, dass die Viskosität von Pflanzenöl stark temperaturabhängig ist. Es muss folglich immer gleichzeitig eine Temperaturmessung durchgeführt werden und in Relation zu der ermittelten Viskosität gesetzt werden.

Bei der Verwendung von Pflanzenöl als Kraftstoff mit hohem Zündpunkt hat sich nun herausgestellt, dass bereits eine verhältnismäßig geringe Zumischung von Dieselkraftstoff mit niedrigem Zündpunkt die Eigenschaften dieser Kraftstoffmischung so beeinflusst, dass sie den Eigenschaften von reinem Dieselkraftstoff wesentlich ähnlicher ist als den Eigenschaften von reinem Pflanzenöl. Das Mischungsverhältnis, bei dem das Kraftstoffgemisch seine Eigenschaften an die Eigenschaften des reinen Dieselkraftstoffs annähert, liegt je nach dem verwendeten Pflanzenöl (oder auch bei Biodiesel) bei einem Anteil von 75 bis 95 Prozent Pflanzenöl und 5 bis 25 Prozent Dieselkraftstoff.

Idealerweise wird der Schwellwert für die detektierten Eigenschaften der Kraftstoffmischung so gelegt, dass die Steuerungsparameter auf den Betrieb mit Pflanzenöl umgeschaltet werden, wenn die Mischung weniger als 20% Dieselkraftstoff enthält und in umgekehrter Weise auf die Steuerungsparameter für Dieselkraftstoff umgeschaltet wird, wenn die Mischung mehr als 20% Dieselkraftstoff enthält. Da ein Kraftstoff, dem 80% reines Rapsöl zugemischt wurden, normalerweise die Verbrennungseigenschaften von Pflanzenöl zeigt, bedeutet dies, dass alle Kraftstoffmischungen, die mehr als 80% Pflanzenöl enthalten, mit den Steuerungsparametern für Pflanzenöl gefahren werden, während alle Mischungen mit mehr als 20% Dieselkraftstoff mit den Steuerungsparametern für Dieselkraftstoff gefahren werden.

Bei modernen Motoren beinhaltet die elektronische Steuerung üblicherweise einen Mikroprozessor, der auf einen Datenspeicher zugreift, in dem die Steuerungsparameter abgelegt sind. Durch diese Steuerungsparameter wird das Kennfeld der Brennkraftmaschine definiert. Durch die erfindungsgemäße Änderung des Einspritzdrucks in Abhängigkeit des verwendeten Kraftstoffes und der Speicherung dieser unterschiedlichen Steuerparameter, lassen sich nun zwei Kennfelder definieren und die Motorsteuerung lässt sich so auf beide Kraftstoffarten optimieren. Dadurch ergibt sich die Möglichkeit, die unterschiedlichen Kraftstoffsorten auch alternierend je nach Verfügbarkeit zu verwenden.

Bei Serienbrennkraftmaschinen, die ursprünglich nur für den Betrieb mit einer Kraftstoffsorte ausgelegt sind, kann eine zweite elektronische Steuerung vorgesehen werden. In diesem Fall wird der Sensor zum Feststellen des verwendeten Kraftstoffes mit einem elektronischen Umschalter verbunden, der die Sensorsignale auswertet und in Abhängigkeit dieser Auswertung auf die erste oder die zweite elektronische Steuerung umschaltet.

Vorteilhafter erscheint jedoch ein anderes Konzept. Hier soll von nur einer elektronischen Steuerung auf unterschiedliche Sätze von Steuerungsparametern zugegriffen werden und die Brennkraftmaschine entsprechend dem verwendeten Kraftstoff über verschiedene Kennfelder betrieben werden. So entnimmt die elektronische Steuerung die unterschiedlichen Steuerungsparameter für die verschiedenen Kraftstoffe beispielsweise aus unterschiedlichen Datenspeichern. Selbstverständlich können hier auch mehr als zwei Datenspeicher bzw. Kennfelder verwendet werden, so dass nicht nur ein, sondern mehrere Schwellwerte für mehrere Kraftstoffmischungen festgelegt werden können.

Bei Verwendung von nur einer elektronischen Steuerung ist auch eine kontinuierliche Anpassung an unterschiedliche Mischungsverhältnisse der verwendeten Kraftstoffsorten denkbar. Hier muss entweder ein Algorithmus oder aber eine LUT (Look UP Table) hinterlegt werden, in dem bzw. in der die unterschiedlichen Mischungsverhältnisse Eingang finden und aus dem bzw. aus der sich die entsprechenden Steuerungsparameter für den Einspritzdruck dann ableiten.

Weitere Einzelheiten und Vorteile der Erfindung ergeben sich aus den Unteransprüchen im Zusammenhang mit der Beschreibung eines Ausführungsbeispiels, das anhand der Zeichnung eingehend erläutert wird.

Es zeigt:
- Fig. 1: ein Blockschaltbild einer erfindungsgemäßen Brennkraftmaschine,
- Fig. 2: ein Diagramm über den Einspritzdruck, Einspritzbeginn, sowie Einspritzdauer bei Pflanzenölbetrieb im Vergleich zu Dieselbetrieb und
- Fig. 3: ein Blockschaltbild der elektronischen Steuerung.

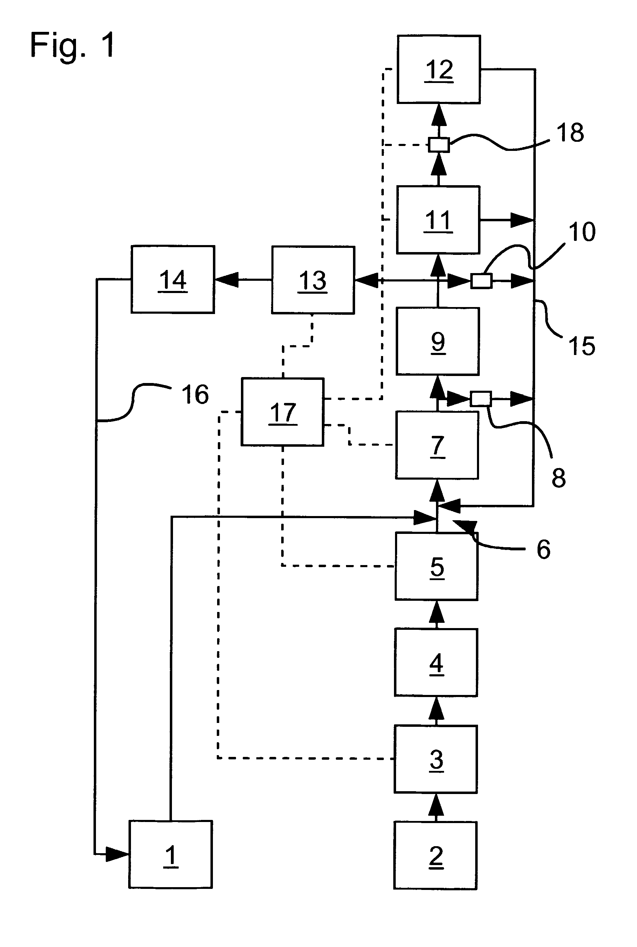

Bei dem in Fig. 1 gezeigten Kraftstoffkreislauf handelt es sich um ein so genanntes Zwei-Tank-System. Es ist ein großer Pflanzenöltank 1 und ein kleiner Dieseltank 2 vorgesehen. Beide Kraftstoffe werden bei der Kraftstoffzusammenführung 6 miteinander vermischt. Zwischen dem Dieseltank 2 und der Kraftstoffzusammenführung 6 sind noch eine Dieselpumpe 3, eine erste Drossel 4 und ein erstes Magnetventil 5 angeordnet.

Der Kraftstoff wird über die Kraftstoffförderpumpe 7 und den Filter 9 der Hochdruckpumpe 11 zur Verfügung gestellt. Dort wird der Kraftstoff auf über 1.000 bar verdichtet und gelangt so in die Einspritzanlage 12. Diese Einspritzanlage 12 kann in Common-Rail-Technik aufgebaut sein, so dass der hoch verdichtete Kraftstoff zuerst einem hier nicht dargestellten Druckspeicher zugeführt wird. Aus diesem Druckspeicher wird der Kraftstoff über die ebenfalls nicht extra dargestellten Einspritzdüsen bei Bedarf in den Brennraum eingespritzt.

Zwischen dem Kraftstofffilter 9 und der Hochdruckpumpe 11 zweigt eine Rücklaufleitung 16 in den Pflanzenöltank 1 ab, in der nur reines Pflanzenöl in den Pflanzenöltank 1 zurückgeleitet werden soll. In der Rücklaufleitung 16 sind ein zweites Magnetventil 13 und eine zweite Drossel 14 vorgesehen.

Eine Kraftstoffrückführung 15 mündet zwischen dem ersten Magnetventil 5 und der Kraftstoffförderpumpe 7. Über diese Leitung rückgeführter Kraftstoff wird der Kraftstoffförderpumpe 7 sofort wieder zur Verfügung gestellt. In die Kraftstoffrückführung 15 wird Leckage-Kraftstoff aus der Einspritzanlage 12 und aus der Hochdruckpumpe 11 eingeleitet. Weiterhin wird die Kraftstoffrückführung 15 über ein erstes Überdruckventil 8 und ein zweites Überdruckventil 10 beschickt.

Es ist eine elektronische Steuerung 17 vorgesehen, die über Leitungen, die in der Zeichnung als gestrichelte Linien dargestellt sind, mit einigen der gezeigten Bauteile verbunden ist. Besonders zu erwähnen ist hier die Verbindung mit der Einspritzanlage 12, über die der Einspritzdruck, der Einspritzbeginn und die Einspritzdauer kontrolliert werden.

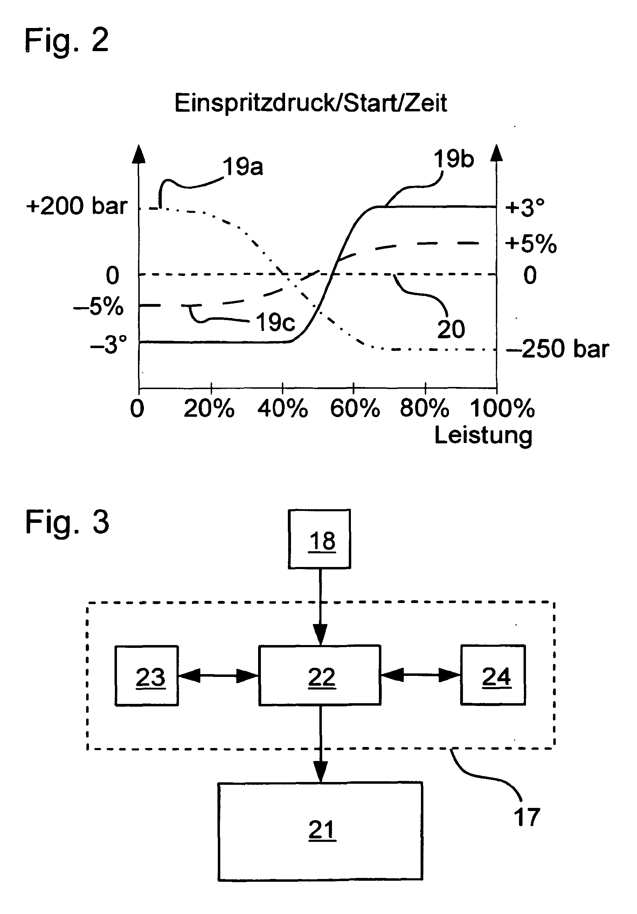

In Fig. 3 ist der Aufbau der elektronischen Steuerung 17 näher gezeigt. Die elektronische Steuerung 17 weist einen Mikroprozessor 22, einen ersten Datenspeicher 23 und einen zweiten Datenspeicher 24 auf. In dem ersten Datenspeicher 23 ist ein erstes Kennfeld über die dazugehörigen ersten Steuerparameter für den Betrieb mit Pflanzenöl, in dem zweiten Datenspeicher 24 dagegen ein zweites Kennfeld über die dazugehörigen zweiten Steuerparameter für den Betrieb mit Dieselkraftstoff abgelegt. Je nach verwendetem Kraftstoff greift der Mikroprozessor 2 entweder auf die Daten aus dem ersten Datenspeicher 23 oder dem zweiten Datenspeicher 24 zu.

Die Daten, aus denen sich auf den verwendeten Kraftstoff schließen lässt, erhält der Mikroprozessor 22 von der Sensoreinheit 18. Die Sensoreinheit 18 kann in hier nicht näher dargestellter Weise aus je einem Drucksensor vor und hinter einer Drossel oder aus einem piezo-elektrischen Torsionsschwinger-Kristall in der Kraftstoffzuführung zusammen mit einem Temperatursensor bestehen. Bei der in Fig. 1 erläuterten Kraftstoffzuführung weist die Sensoreinheit 18 dagegen nur einen Durchflussmesser auf. Da die zugeführte Menge an Dieselkraftstoff immer bekannt ist, lässt sich aus der durch die Sensoreinheit 18 fließenden Menge in einfacher Weise das Verhältnis von Dieselkraftstoff zu Pflanzenöl berechnen.

Bei allen beispielhaft erwähnten Sensoreinheiten ermittelt der Mikroprozessor 22 aus den Signalen der Sensoreinheit 18 die Zusammensetzung des in der Zuführung vorhandenen Kraftstoffes. Ist der Anteil von Pflanzenöl in der Kraftstoffmischung größer als 80%, entnimmt der Mikroprozessor 22 die Steuerparameter aus dem ersten Datenspeicher 23 und steuert damit den Motor 21 nach einem ersten Kennfeld. Bei einem Schwellwert, der einem Mischungsverhältnis von 80% Pflanzenöl und 20% Dieselkraftstoff zuzuordnen ist, schaltet der Mikroprozessor 22 auf den zweiten Datenspeicher 24 um und steuert den Motor 21 folglich bei einem Dieselanteil in der Kraftstoffmischung, der größer als 20% ist, mit Steuerungsparametern aus dem zweiten Datenspeicher 24 nach einem zweiten Kennfeld. Der Motor 21 wird hier stellvertretend für alle Bauteile genannt, mit denen die Steuerung 17 elektrisch über die gestrichelt gezeichneten Verbindungen kommuniziert.

Bei einem Start der Brennkraftmaschine wird auch die Dieselpumpe 3 in Betrieb gesetzt. Die Fördermenge der Dieselpumpe 3 ist so bemessen, dass an der ersten Drossel 4 immer ein geringer Überdruck ansteht. Dieselpumpe 3 und erste Drossel 4 sind weiterhin so abgestimmt, dass die aus dem Dieseltank 2 geförderte Menge an Dieselkraftstoff für den Betrieb der Brennkraftmaschine mit Leerlaufdrehzahl ausreichend ist. Die Einspritzanlage 12 erhält auf diese Weise reinen Dieselkraftstoff. In diesem Betriebszustand ist das zweite Magnetventil 13 geschlossen, so dass kein Rückfluss über die zweite Drossel 14 und die Rücklaufleitung 16 in den Pflanzenöltank 1 stattfinden kann.

Die Sensoreinheit 18 misst in diesem Zustand einen Durchfluss, der der eingestellten Menge an Dieselkraftstoff entspricht. Zur Einstellung von Einspritzdruck, Einspritzbeginn und Einspritzdauer greift der Mikroprozessor 22 deshalb auf die in dem zweiten Datenspeicher 24 abgelegten Werte des zweiten Kennfelds zurück.

Sobald der Brennkraftmaschine eine höhere Leistung abverlangt wird, fördert die Kraftstoffförderpumpe 7 ein größeres Kraftstoffvolumen. Da durch die Dieselpumpe 3 jedoch kontinuierlich eine konstante Menge gefördert wird, entsteht in dem System vor der Kraftstoffförderpumpe 7 ein Unterdruck. Dadurch wird aus dem Pflanzenöltank 1 Pflanzenöl angesaugt und an der Kraftstoffzusammenführung 6 mit dem Dieselkraftstoff vermischt. Diese Kraftstoffmischung wird über den Filter 9 zur Hochdruckpumpe 11 geführt und von dort mit hohem Druck an die Einspritzanlage 12 weitergeleitet.

Umso mehr die Leistung erhöht wird, desto größer wird das von der Kraftstoffförderpumpe 7 geförderte Kraftstoffvolumen. Da die Menge an Dieselkraftstoff immer konstant bleibt, erhöht sich folglich mit der Leistung auch der Anteil an Pflanzenöl. Das Mischungsverhältnis zwischen Dieselkraftstoff und Pflanzenöl wird folglich vollkommen automatisch an die abgeforderte Leistung angepasst.

Misst die Sensoreinheit 18 im oberen Lastbereich einen Pflanzenölanteil von mehr als 80%, schaltet der Mikroprozessor 22 in der elektronischen Steuerung 17 um. Für die Kontrolle von Einspritzdruck, Einspritzbeginn und Einspritzdauer werden nun nicht mehr die in dem zweiten Datenspeicher 24, sondern die im ersten Datenspeicher 23 hinterlegten Werte des ersten Kennfelds verwendet.

Im Hochleistungsbereich kann die Brennkraftmaschine mit reinem Pflanzenöl betrieben werden. Über die elektronische Steuerung 17 wird nun das erste Magnetventil 5 geschlossen. Gleichzeitig wird die Dieselpumpe 3 außer Betrieb gesetzt. Dies kann entweder über die elektronische Steuerung 17 erfolgen, oder aber es ist zwischen Dieselpumpe 3 und erstem Magnetventil 5 ein Druckschalter eingebaut, der die Dieselpumpe 3 bei einem voreingestellten Druck abschaltet.

Da die Brennkraftmaschine im Hochlastbereich ausschließlich mit Pflanzenöl betrieben wird, werden hier die für den Einspritzbeginn relevanten Steuerdaten des ersten Kennfelds aus dem ersten Datenspeicher 23 entnommen. Bei einer Ausführungsform, bei der die Umschaltung auf reines Pflanzenöl erfolgt, wenn die Einspritzmenge mehr als 60% der maximalen Einspritzmenge beträgt, kann auf die Sensoreinheit 18 verzichtet werden. Hier kann der zweite Datenspeicher 24 für den Betrieb mit konstanter Dieselzugabe und der erste Datenspeicher 23 für den Betrieb mit reinem Pflanzenöl verwendet werden. Da das Schließen des ersten Magnetventils 5 und das Stoppen der Dieselpumpe 3 durch die Steuerung 17 eingeleitet wird, kann auch die Umschaltung auf den ersten Datenspeicher 23 zur gleichen Zeit durch die Steuerung 17 ohne Abfrage der Sensoreinheit 18 erfolgen.

Das Überdruckventil 10 ist vorgesehen, um zu gewährleisten, dass an der Hochdruckpumpe 11 in etwa immer der gleiche Vordruck ansteht. Bei zu hohem Vordruck öffnet das zweite Überdruckventil 10, so dass der zu viel geförderte Kraftstoff über die Rückführung 15 wieder der Ansaugseite der Kraftstoffförderpumpe 7 zugeführt wird. In ähnlicher Weise wirkt das erste Überdruckventil 8. Hier soll verhindert werden, dass sich vor dem Filter 9 ein Druck aufbauen kann, der den Filter zerstören könnte. Auch hier wird der überschüssige Kraftstoff durch das erste Überdruckventil 8 und die Rückführung 15 wieder der Saugseite der Kraftstoffförderpumpe 7 zugeführt.

Insbesondere im Hochlastbereich würde sich der Kraftstoff in dem Kreislauf über die Kraftstoffförderpumpe 7, den Filter 9, die Hochdruckpumpe 11, die Einspritzanlage 12 und die Rückführung 15 zu stark erhitzen, so dass es zur Blasenbildung im Kraftstoff kommen könnte. Über die Steuerung 17 wird deshalb im Hochlastbereich das zweite Magnetventil 13 geöffnet. Hierdurch bildet sich für den Kraftstoff ein Kühlkreislauf über den Pflanzenöltank 1 aus. Dieser Kühlkreislauf wird durch die zweite Drossel 14 geregelt. Steht an der zweiten Drossel 14 kaltes zähflüssiges Pflanzenöl an, so wird nur eine geringe Menge die zweite Drossel 14 passieren. Es steht folglich an der Hochdruckpumpe 11 ein höherer Druck an, der eine komplette Füllung der Hochdruckpumpe 11 gewährleistet. Überschüssiges Pflanzenöl wird über die Rückführung 15 in kleinem Kreislauf geführt und heizt sich somit relativ schnell auf. Sobald das Pflanzenöl erwärmt ist, erhöht sich aufgrund der geringeren Zähigkeit auch die Durchflussrate durch die zweite Drossel 14, so dass mehr Pflanzenöl über den Kühlkreislauf durch die Rücklaufleitung 16 und den Pflanzenöltank 1 geführt wird.

Da das zweite Magnetventil 13 nur im Hochlastbereich geöffnet ist, ist sichergestellt, dass ausschließlich reines Pflanzenöl in den Pflanzenöltank 1 rückgeführt wird. Wird die Brennkraftmaschine danach wieder in einem mittleren Leistungsbereich betrieben, wird über die elektronische Steuerung 17 das zweite Magnetventil 13 wieder geschlossen. Gleichzeitig wird das erste Magnetventil 5 wieder geöffnet, so dass wieder eine konstante Menge Dieselkraftstoff zugeführt werden kann.

Die Regelung der Kraftstoffzusammensetzung zwischen dem mittleren und dem unteren Lastbereich erfolgt automatisch. Sinkt die Leistung in den unteren Lastbereich ab, wird ebenfalls die Fördermenge der Kraftstoffförderpumpe 7 verringert. Damit verringert sich auch die angesaugte Menge Pflanzenöl aus dem Pflanzenöltank 1. Bei Erreichen der Leerlaufdrehzahl ist wiederum die aus dem Dieseltank 2 geförderte Menge an Dieselkraftstoff für den Betrieb ausreichend. Da in diesem Betriebszustand der Dieselkraftstoff mit geringem Überdruck an der Kraftstoffförderpumpe 7 ansteht, kann in der Leitung zwischen Pflanzenöltank 1 und der Kraftstoffzusammenführung 6 ein Rückschlagventil eingebaut sein. Dieses in der Zeichnung nicht dargestellte Rückschlagventil verhindert, dass Dieselkraftstoff in den Pflanzenöltank 1 gelangt. Wird dagegen die Fördermenge des Dieselkraftstoffs durch die Dieselpumpe 3 und die erste Drossel 4 so eingestellt, dass sie für ein Betreiben der Brennkraftmaschine in der Leerlaufdrehzahl nicht ganz ausreicht, wird von der Kraftstoffförderpumpe 7 auch in diesem Lastbereich ein Unterdruck erzeugt. Es wird dann in jedem Betriebszustand Pflanzenöl aus dem Pflanzenöltank 1 angesaugt, und es kann auch ohne das Vorsehen eines Rückschlagventils kein Dieselkraftstoff in den Pflanzenöltank 1 gelangen.

In dem Diagramm aus Fig. 2 sind Steuerdaten für den Betrieb mit Pflanzenöl 19 gegenüber Steuerdaten für den Betrieb mit Dieselkraftstoff 20 aufgetragen. Die Steuerdaten für den Betrieb mit Pflanzenöl 19 sind dabei auf die Steuerdaten für den Betrieb mit Dieselkraftstoff 20 normalisiert, so dass alle Steuerdaten für den Betrieb mit Dieselkraftstoff 20 als Gerade darzustellen sind. Diese Darstellung zeigt sehr gut, wie die Steuerdaten für Pflanzenöl 19 gegenüber den Steuerdaten für Dieselkraftstoff 20 in Abhängigkeit von der Leistung verschoben sind.

Als Graph 19a ist der Einspritzdruck für Pflanzenöl, der beispielsweise in einem Common-Rail Druckspeicher aufgebaut wird, über die Leistung aufgetragen. Auf der Y-Achse ist hier der Einspritzdruck für Pflanzenöl bezogen auf den Einspritzdruck für Dieselkraftstoff angetragen. Im unteren Leistungsbereich bis ca. 20% der vollen Leistung liegt der Einspritzdruck für Pflanzenöl 19a etwa 200 bar über dem Einspritzdruck für Dieselkraftstoff 20. In einem mittleren Leistungsbereich zwischen etwa 20% und 70% Vollast verändert sich der Abstand zwischen dem Einspritzdruck für Pflanzenöl 19a und Dieselkraftstoff 20 kontinuierlich. Etwa bei 40% Volllast kreuzen sich die beiden Graphen 19a, 20. In diesem Leistungsbereich besteht kein Unterschied zwischen dem Einspritzdruck für Dieselkraftstoff 20 und dem Einspritzdruck für Pflanzenöl 19a. Ab ca. 70% der vollen Leistung liegt der Einspritzdruck für Pflanzenöl 19a etwa 250 bar tiefer als der Einspritzdruck für Dieselkraftstoff 20. Dieser geringere Einspritzdruck gilt für den gesamten Hochlastbereich.

In umgekehrter Weise verläuft die Kurve für den Einspritzbeginn für Pflanzenöl 19b. Hier ist in Y-Richtung der Kurbelwellenwinkel für den Einspritzbeginn bei Pflanzenöl bezogen auf den Kurbelwellenwinkel bei Dieselkraftstoff angetragen. Im unteren Lastbereich ist der Einspritzbeginn für Pflanzenöl 19b etwa um 3° vorverlegt gegenüber dem Einspritzbeginn für Dieselkraftstoff 20. Im Hochlastbereich findet dagegen eine um 3° spätere Einspritzung statt. Der gleiche Einspritzbeginn für Dieselkraftstoff 20 und Pflanzenöl 19b wird etwa zwischen 50% und 60% der vollen Leistung gewählt.

Um mit Dieselkraftstoff und Pflanzenöl etwa dieselbe Leistung zu erreichen, wird entsprechend bei einer Erhöhung des Einspritzdrucks die Einspritzdauer verringert, bzw. bei Verringerung des Einspritzdrucks die Einspritzdauer verlängert. Die Verringerung bzw. Verlängerung beträgt im Höchstfall - also im unteren und im oberen Lastbereich - jeweils in etwa 5%, allerdings mit umgekehrtem Vorzeichen. Die Kurve für die Einspritzdauer für Pflanzenöl 19c verläuft folglich entgegengesetzt zu der Kurve für den Einspritzdruck 19a. In Y-Richtung ist folglich die prozentuale Abweichung der Einspritzdauer für Pflanzenöl gegenüber der Einspritzdauer für Dieselkraftstoff angetragen.

Bei dem in Fig. 1 gezeigten Ausführungsbeispiel benötigt die Steuerung 17 für den Betrieb mit Pflanzenöl normalerweise nur die entsprechenden Steuerdaten im Hochlastbereich. Im Niedrig- und Mittellastbereich wird auf die Steuerdaten für den Betrieb mit Dieselkraftstoff zugegriffen.

Alle in dem Diagramm nach Fig. 2 gezeigten Steuerdaten für den Einspritzdruck, den Einspritzbeginn und die Einspritzdauer kommen üblicherweise bei Ein-Tank-Systemen zum Einsatz. Hier kann Kraftstoff in jedem Mischungsverhältnis zum Einsatz kommen. Da dieses Mischungsverhältnis dann in allen Lastbereichen konstant ist, muss entsprechend auf die Werte des Graphen 19 oder 20 zurückgegriffen werden. Der Mikroprozessor 22 entnimmt die Steuerdaten der beiden Kennfelder folglich in Abhängigkeit von dem verwendeten Kraftstoff dem ersten Datenspeicher 23 oder dem zweiten Datenspeicher 24. Der verwendete Treibstoff kann entweder manuell eingegeben oder über einen Sensor gemessen werden.

### Bezugszeichenliste:

- 1: Pflanzenöltank
- 2: Dieseltank
- 3: Dieselpumpe
- 4: erste Drossel
- 5: erstes Magnetventil
- 6: Kraftstoffzusammenführung
- 7: Kraftstoffförderpumpe
- 8: erstes Überdruckventil
- 9: Kraftstofffilter
- 10: zweites Überdruckventil
- 11: Hochdruckpumpe
- 12: Einspritzanlage
- 13: zweites Magnetventil
- 14: zweite Drossel
- 15: Rückführung
- 16: Rücklaufleitung
- 17: elektronische Steuerung
- 18: Sensor
- 19: Steuerdaten bei Pflanzenöl
- 19a: Einspritzdruck bei Pflanzenöl
- 19b: Einspritzbeginn bei Pflanzenöl
- 19c: Einspritzdauer bei Pflanzenöl
- 20: Steuerdaten bei Dieselkraftstoff
- 21: Motor
- 22: Mikroprozessor
- 23: erster Datenspeicher
- 24: zweiter Datenspeicher

## Patentansprüche

1. Dieselmotorisch betriebene Brennkraftmaschine, die mit einem Kraftstoff mit niedrigem Zündpunkt und mit einem Kraftstoff mit höherem Zündpunkt betreibbar ist, mit wenigstens einem Kraftstofftank (1), mit einer Hochdruckpumpe (11), mit einer Einspritzanlage (12) und mit einer elektronischen Steuerung (17), in der unterschiedliche Steuerungsparameter für den Betrieb mit dem Kraftstoff mit niedrigem Zündpunkt und dem Betrieb mit dem Kraftstoff mit höherem Zündpunkt hinterlegt sind, **dadurch gekennzeichnet, dass** in der elektronischen Steuerung (17) Steuerungsparameter (19, 20) für den Einspritzdruck hinterlegt sind, wobei der Einspritzdruck für den Kraftstoff mit dem höheren Zündpunkt gegenüber dem Kraftstoff mit dem niedrigen Zündpunkt im Hochlastbereich abgesenkt und im Niederlastbereich angehoben oder gleich ist.

2. Dieselmotorisch betriebene Brennkraftmaschine nach Anspruch 1, **dadurch gekennzeichnet, dass** sich die Einspritzdauer umgekehrt zum Einspritzdruck verhält, so dass bei einer Absenkung des Einspritzdrucks für den Kraftstoff mit dem niedrigen Zündpunkt gegenüber dem Kraftstoff mit dem höheren Zündpunkt die Einspritzdauer verlängert wird.

3. Dieselmotorisch betriebene Brennkraftmaschine nach Anspruch 1, **dadurch gekennzeichnet, dass** der Einspritzdruck für den Kraftstoff mit dem höheren Zündpunkt gegenüber dem Kraftstoff mit dem niedrigen Zündpunkt im Niedriglastbereich angehoben ist.

4. Dieselmotorisch betriebene Brennkraftmaschine nach Anspruch 1, **dadurch gekennzeichnet, dass** ein Sensor (18) vorgesehen ist, mit dem der verwendete Kraftstoff detektiert wird und dessen Ausgangssignal eine automatische Anpassung der Steuerungsparameter an den detektierten Kraftstoff auslöst.

5. Dieselmotorisch betriebene Brennkraftmaschine nach Anspruch 4, **dadurch gekennzeichnet, dass** der verwendete Kraftstoff mit einem Wärmeleitsensor detektiert wird.

6. Dieselmotorisch betriebene Brennkraftmaschine nach Anspruch 4, **dadurch gekennzeichnet, dass** der verwendete Kraftstoff über seine Viskosität in Abhängigkeit von der Temperatur festgestellt wird.

7. Dieselmotorisch betriebene Brennkraftmaschine nach Anspruch 6, **dadurch gekennzeichnet, dass** die Viskosität mit je einem Drucksensor vor und nach einer Drossel oder mit einem piezo-elektrischen Torsionsschwinger-Kristall ermittelt wird.

8. Dieselmotorisch betriebene Brennkraftmaschine nach Anspruch 4, **dadurch gekennzeichnet, dass** bei Verwendung einer Mischung der Kraftstoffe die Steuerungsparameter in Abhängigkeit von einem Schwellwert angepasst werden.

9. Dieselmotorisch betriebene Brennkraftmaschine nach Anspruch 8, **dadurch gekennzeichnet, dass** bei einer Änderung der Mischung von Kraftstoff mit niedrigem Zündpunkt und Kraftstoff mit höherem Zündpunkt der Schwellwert so dimensioniert ist, dass bei einer Mischung von Kraftstoff mit niedrigem Zündpunkt zu Kraftstoff mit höherem Zündpunkt in einem Bereich zwischen 75 zu 25 und 95 zu 5 auf die Steuerungsparameter des jeweils anderen Kraftstoffes umgeschaltet wird.

10. Dieselmotorisch betriebene Brennkraftmaschine nach Anspruch 9, **dadurch gekennzeichnet, dass** der Schwellwert so dimensioniert ist, dass bei einer Mischung von 80% oder weniger an Kraftstoff mit höherem Zündpunkt zu 20% oder mehr an Kraftstoff mit niedrigem Zündpunkt auf die Steuerungsparameter von Kraftstoff mit niedrigem Zündpunkt zugegriffen wird.

11. Dieselmotorisch betriebene Brennkraftmaschine nach Anspruch 4, **dadurch gekennzeichnet, dass** zwei elektronische Steuerungen (17) vorgesehen sind, wobei jede elektronische Steuerung einer Kraftstoffsorte zugeordnet ist.

12. Dieselmotorisch betriebene Brennkraftmaschine nach Anspruch 4, **dadurch gekennzeichnet, dass** zwei Datenspeicher (23, 24) für die Steuerungsparameter vorgesehen sind und die elektronische Steuerung (17) in Abhängigkeit des verwendeten Kraftstoffes auf einen der Datenspeicher (23, 24) zugreift.

## Claims

1. An internal combustion engine operating according to the compression-ignition principle, able to be operated with a fuel having a low ignition point and with a fuel having a higher ignition point, comprising at least one fuel tank (1), a high-pressure pump (11), an injection system (12) and an electronic controller (17), in which different control parameters are stored for operation with the fuel having the low ignition point and operation with the fuel having the higher ignition point, **characterized in that** the electronic controller (17) stores control parameters (19, 20) for the injection pressure, wherein the injection pressure for the fuel having the low ignition point is lowered in the high-load range and is raised in the low-load range, or is the same.

2. The internal combustion engine operating according to the compression-ignition principle according to claim 1, **characterized in that** the injection duration is the reciprocal of the injection pressure, so that as the injection pressure for the fuel having the low ignition point is lowered, the injection duration is extended with respect to the fuel having the higher ignition point.

3. The internal combustion engine operating according to the compression-ignition principle according to claim 1, **characterized in that** the injection pressure for the fuel having the higher ignition point is raised with respect to the fuel having the low ignition point in the low-load range.

4. The internal combustion engine operating according to the compression-ignition principle according to claim 1, **characterized in that** a sensor (18) is provided for detecting the fuel used having an output signal for triggering automatic adjustment of the control parameters to the fuel detected.

5. The internal combustion engine operating according to the compression-ignition principle according to claim 4, **characterized in that** the fuel used is detected by means of a thermal conductivity sensor.

6. The internal combustion engine operating according to the compression-ignition principle according to claim 4, **characterized in that** the fuel used is determined by its viscosity as a function of temperature.

7. The internal combustion engine operating according to the compression-ignition principle according to claim 6, **characterized in that** the viscosity is determined by means of one pressure sensor both upstream and downstream of a throttle or by means of a piezoelectric torsional oscillator crystal.

8. The internal combustion engine operating according to the compression-ignition principle according to claim 4, **characterized in that** when the fuels are mixed the control parameters are adjusted as a function of a threshold value.

9. The internal combustion engine operating according to the compression-ignition principle according to claim 8, **characterized in that** when a mixture of a fuel having a low ignition point and a fuel with a higher ignition point is used, the threshold value is adapted such that when a mixing ratio of the fuel having the low ignition point to the fuel having the higher ignition point is in the range between 75 to 25 and 95 to 5, the control parameters of the one fuel are switched over to those of the other fuel.

10. The internal combustion engine operating according to the compression-ignition principle according to claim 9, **characterized in that** the threshold value is adapted such that at a mixing ratio of 80% or less of fuel having a higher ignition point to 20% or more of fuel having the low ignition point, the control parameters of the fuel having the low ignition point are accessed.

11. The internal combustion engine operating according to the compression-ignition principle according to claim 4, **characterized in that** two electronic controllers (17) are provided, wherein each electronic controller is associated with one type of fuel.

12. The internal combustion engine operating according to the compression-ignition principle according to claim 4, **characterized in that** two data storage devices (23, 24) are provided for the control parameters and the electronic controller (17) accesses one of the data storage devices (23, 24) as a function of the fuel used.

## Revendications

1. Moteur à combustion interne entraîné par un moteur diesel qui peut être actionné avec un carburant ayant un point d'inflammation bas et avec un carburant ayant un point d'inflammation élevé, avec au moins un réservoir à carburant (1), avec une pompe haute pression (11), avec un système d'injection (12) et avec une commande électronique (17), dans laquelle sont enregistrés différents paramètres de commande pour le fonctionnement avec le carburant ayant un point d'inflammation bas et le fonctionnement avec le carburant ayant un point d'inflammation élevé, **caractérisé en ce que** des paramètres de commande (19, 20) pour la pression d'injection sont enregistrés dans la commande électronique (17), la pression d'injection pour le carburant ayant le point d'inflammation élevé par rapport au carburant ayant le point d'inflammation bas étant abaissée dans la zone de fortes charges et augmentée dans la zone de faibles charges ou étant égale.

2. Moteur à combustion interne entraîné par un moteur diesel selon la revendication 1, **caractérisé en ce que** la durée d'injection se comporte inversement à la pression d'injection, de sorte que la durée d'injection est prolongée lors d'un abaissement de la pression d'injection pour le carburant ayant le point d'inflammation bas par rapport au carburant ayant le point d'inflammation élevé.

3. Moteur à combustion interne entraîné par un moteur diesel selon la revendication 1, **caractérisé en ce que** la pression d'injection pour le carburant ayant le point d'inflammation élevé par rapport au carburant ayant le point d'inflammation bas est augmentée dans la zone de faibles charges.

4. Moteur à combustion interne entraîné par un moteur diesel selon la revendication 1, **caractérisé en ce qu'**un capteur (18) est prévu avec lequel le carburant utilisé est détecté et dont le signal de sortie déclenche un ajustement automatique des paramètres de commande au carburant détecté.

5. Moteur à combustion interne entraîné par un moteur diesel selon la revendication 4, **caractérisé en ce que** le carburant utilisé est détecté avec un capteur de conduction thermique.

6. Moteur à combustion interne entraîné par un moteur diesel selon la revendication 4, **caractérisé en ce que** le carburant utilisé est déterminé par sa viscosité en fonction de la température.

7. Moteur à combustion interne entraîné par un moteur diesel selon la revendication 6, **caractérisé en ce que** la viscosité est déterminée avec à chaque fois un détecteur de pression avant et après un dispositif d'étranglement ou avec un cristal d'oscillateur de torsion piézoélectrique.

8. Moteur à combustion interne entraîné par un moteur diesel selon la revendication 4, **caractérisé en ce que** lors de l'utilisation d'un mélange des carburants, les paramètres de commande sont adaptés en fonction d'une valeur de seuil.

9. Moteur à combustion interne entraîné par un moteur diesel selon la revendication 8, **caractérisé en ce que** lors d'une modification du mélange de carburant ayant un point d'inflammation bas et du carburant ayant un point d'inflammation élevé, la valeur de seuil est dimensionnée de manière telle que dans un mélange de carburant ayant un point d'inflammation bas à un carburant ayant un point d'inflammation élevé dans une plage située entre 75 à 25 et 95 à 5, une commutation s'effectue à chaque fois vers les paramètres de commande de l'autre carburant.

10. Moteur à combustion interne entraîné par un moteur diesel selon la revendication 9, **caractérisé en ce que** la valeur de seuil est dimensionnée de manière telle que dans un mélange de 80 % ou moins à un carburant ayant un point d'inflammation élevé à 20 % ou plus à un carburant ayant un point d'inflammation bas, un accès s'effectue aux paramètres de commande du carburant ayant un point d'inflammation bas.

11. Moteur à combustion interne entraîné par un moteur diesel selon la revendication 4, **caractérisé en ce que** deux commandes électroniques (17) sont prévues, chaque commande électronique étant affectée à un type de carburant.

12. Moteur à combustion interne entraîné par un moteur diesel selon la revendication 4, **caractérisé en ce que** deux mémoires de données (23, 24) sont prévues pour les paramètres de commande et la commande électronique (17) accède à l'une des mémoires de données (23, 24) en fonction du carburant utilisé.
